Europäisches Patentamt

European Patent Office

Office européen des brevets

(11) Veröffentlichungsnummer: **0 468 421 A1**

## (12) EUROPÄISCHE PATENTANMELDUNG

(21) Anmeldenummer: **91112270.3**

(22) Anmeldetag: **22.07.91**

(51) Int. Cl.5: **F01M  11/12**, G01F 23/68,
G01F 23/24

(30) Priorität: **26.07.90 DE 9011060 U**

(43) Veröffentlichungstag der Anmeldung:
**29.01.92 Patentblatt  92/05**

(84) Benannte Vertragsstaaten:
**AT BE CH DE IT LI NL SE**

(71) Anmelder: **WOLF-Geräte Gmbh
Vertriebsgesellschaft KG
Gregor-Wolf-Strasse
W-5240 Betzdorf/Sieg(DE)**

(72) Erfinder: **Pfau, Ulrich
Auf der Bölze 2
W-5244 Daaden(DE)**
Erfinder: **LeBihan, Bernhard
Alte Poststrasse 34
W-5241 Katzwinkel(DE)**

(74) Vertreter: **Koch, Günther, Dipl.-Ing. et al
P.O. Box 121120
W-8000 München 12(DE)**

(54) Ölstandskontrollvorrichtung für die Antriebsbrennkraftmaschine eines Rasenmähers.

(57) Zur bequemen und sauberen Kontrolle des Öl-standes ist eine Ölstandskontrollvorrichtung vorgese-hen, die einen Sensor (18) aufweist, der in die Öl-wanne (12) einer Brennkraftmaschine einsteht. Der Sensor (18), der vorzugsweise als Schwimmerschal-ter ausgebildet ist, ist auf den minimalen Ölstand-spegel (14) eingestellt und liefert kontinuierlich oder auf Abruf über eine elektronische Auswerteschaltung (20) Signale, die zwischen ausreichendem Ölstand und zu niedrigem Ölstand unterscheiden.

Fig. 2

EP 0 468 421 A1

Die Erfindung bezieht sich auf eine Ölstandskontrollvorrichtung für Brennkraftmaschinen, insbesondere für solche, die zum Antrieb von Rasenmähern oder anderen handgeführten Maschinen im privaten Bereich oder auch in Handwerksbetrieben eingesetzt werden. Bei derartigen Maschinen wird im allgemeinen aus Unkenntnis oder Bequemlichkeit keine regelmäßige Kontrolle des Ölstandes vorgenommen, was zu schwerwiegenden Beschädigungen der Brennkraftmaschine führen kann, wenn ein vorbestimmter Ölstand unterschritten wird.

Die Kontrolle des Ölstandes erfolgte bisher ausschließlich über einen Ölmeßstab, der aus der Ölwanne herausgezogen, abgewischt, wieder eingeführt, dann zur Kontrolle entnommen, und schließlich wieder eingesteckt werden mußte.

Der Erfindung liegt die Aufgabe zugrunde, eine Ölstandskontrollvorrichtung für Brennkraftmaschinen zu schaffen, die ohne komplizierte manuelle Betätigung eine bequeme und saubere Überwachung des Ölstandes ermöglicht.

Gelöst wird die gestellte Aufgabe bei einer Brennkraftmaschine, deren Ölwanne an ihrer tiefsten Stelle mit einer Ölablaßschraube versehen ist, dadurch, daß die Ölablaßschraube an ihrem inneren Ende einen Sensor trägt, der im eingebauten Zustand auf dem Pegel des minimalen Ölstandes steht und an eine elektronische Auswerteschaltung angeschlossen ist. Die Anordnung ist dabei vorzugsweise so getroffen, daß unterschieden wird zwischen einem Ölstand, der über dem Grenzpegel liegt und einem solchen Ölstand, der darunter liegt. Gemäß einer abgewandelten Ausführungsform könnte die Anordnung auch so getroffen werden, daß die tatsächliche Füllmenge zwischen dem maximalen Ölstand und dem minimalen Ölstand angezeigt wird oder verschiedene Stufen innerhalb dieses Bereichs zwischen Maximalstand und Minimalstand.

Der Sensor ist vorzugsweise als Schwimmerschalter ausgebildet, der bei normalem Füllstand einen Schaltzustand aufweist und bei Erreichen des minimalen Füllstandes in den anderen Schaltzustand übergeht.

Die Kombination der Ölablaßschraube mit dem Flüssigkeitsstandssensor ist besonders zweckmäßig, weil keinerlei Veränderungen des Motors erforderlich sind, sondern lediglich eine speziell ausgebildete Ölablaßschraube Verwendung finden muß, die eine isolierte elektrische Zuführung nach dem Sensor erhält.

Der Sensor kann auch als Kaltleiter ausgebildet sein, wobei die Kontrolle einfach auf eine Widerstandsmessung zurückgeführt werden kann.

Die an den Sensor angeschlossene Auswerteschaltung kann nach einer zweckmäßigen Ausgestaltung der Erfindung folgende Funktionen aufweisen:

Nach Einschaltung durch Betätigung eines Tasters leuchtet eine gelbe Kontrollampe auf, wodurch angezeigt wird, daß die Messung läuft. Dabei wird ein Strom durch den Kaltleiter geschickt, der sich hierdurch aufheizt. Nach Ablauf einer vorbestimmten Zeitdauer, z.B. 15 Sekunden, wird der Strom über einen Schwellwertschalter in bekannter Weise gemessen und in Abhängigkeit von der gemessenen Stromstärke angezeigt, ob genügend Öl vorhanden ist oder nicht. Ist der Strom kleiner als ein vorbestimmter Stromwert, so zeigt dies den Zustand an, in den der Kaltleiter nicht mit Öl bedeckt ist, d.h. der Ölstand ist zu gering und es leuchtet eine rote Warnlampe auf.

Ist der Strom größer als ein vorbestimmter Wert, so macht dies erkennbar, daß der Kaltleiter mit Öl bedeckt ist und es leuchtet eine grüne Lampe auf.

Nachstehend wird ein Ausführungsbeispiel der Erfindung anhand der Zeichnung beschrieben. In der Zeichnung zeigen:

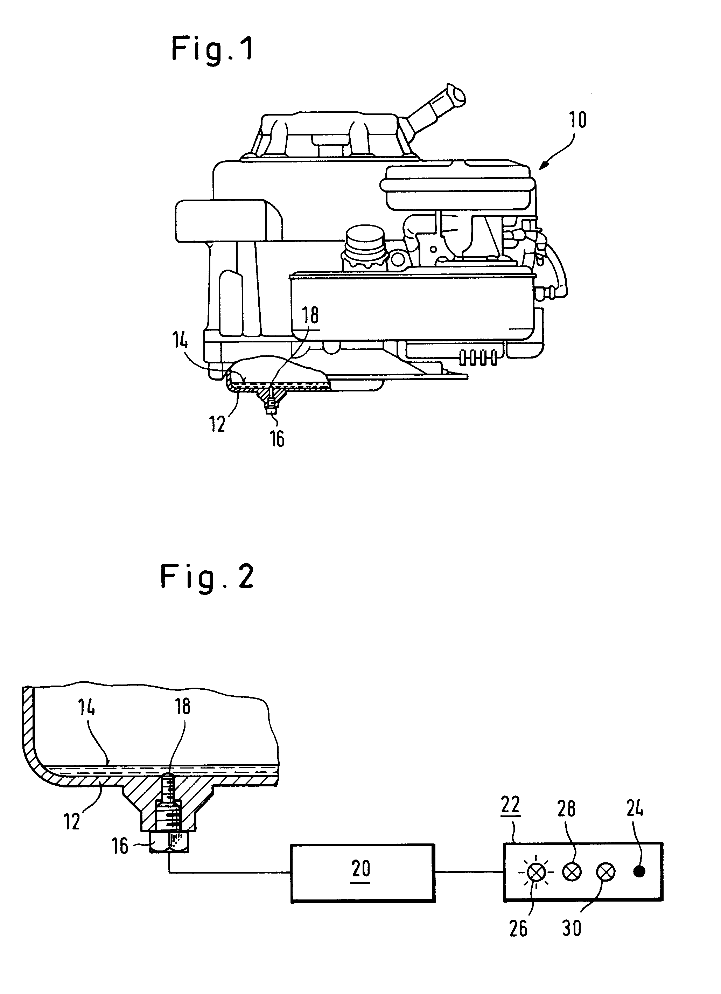

Fig. 1 eine Ansicht einer Brennkraftmaschine, die im Bereich der Ölwanne aufgebrochen ist;

Fig. 2 in größerem Maßstab eine Teilschnittansicht der Ölwanne mit an den Flüssigkeitsstandssensor angeschlossener Auswerteschaltung.

Die Brennkraftmaschine 10 weist eine Ölwanne 12 auf, in der der minimal zulässige Ölstand durch die Pegelmarke 14 gekennzeichnet ist. An der tiefsten Stelle weist die Ölwanne 12 eine Ölablaßschraube 16 auf, die an ihrem inneren Ende einen Sensor 18 trägt. Dieser könnte so ausgebildet sein, daß er in die Ölwanne bis zum maximalen Ölstandspegel einsteht und den Ölstand kontinuierlich oder stufenweise anzeigt. Gemäß dem bevorzugten Ausführungsbeispiel erfolgt eine Unterscheidung zwischen 'genügendem Ölstand' und 'ungenügendem Ölstand'. Zu diesem Zweck steht der vorzugsweise als Schwimmerschalter oder als Kaltleiter ausgebildete Sensor 18 in den Bereich des minimalen Ölstandspegels 12 ein.

Die Ölablaßschraube 16 weist eine Durchführung elektrischer Anschlußdrähte auf, die an eine Auswerteschaltung 20 angeschlossen sind.

Mit der Auswerteschaltung steht eine Anzeigetafel in Verbindung, die beispielsweise am Führungsgriff eines Rasenmähers angeordnet sein kann. Diese Anzeigetafel trägt einen Taster 24 zum kurzzeitigen Einschalten der Überwachungsschaltung. Ferner sind drei Signallampen 26, 28, 30 vorgesehen. Die Signallampe 26 ist gelb und zeigt den Einschaltzustand an, die Signallampe 28 ist grün und zeigt an, daß ein genügender Ölvorrat vorhanden ist.

Die Signallampe 30 leuchtet rot und zeigt an, daß der minimale Ölstand unterschritten ist.

Die Anzeige kann auch als Display ausgeführt sein, auf dem graphische Symbole entsprechend dem Sensorsignal angezeigt werden.

**Patentansprüche**

1. Ölstandskontrollvorrichtung für Brennkraftmaschinen (10), die an der tiefsten Stelle ihrer Ölwanne (12) mit einer Ölablaßschraube (16) versehen sind,
dadurch gekennzeichnet, daß die Ölablaßschraube (12) an ihrem inneren Ende einen Flüssigkeitsstandssensor (18) trägt, der an eine elektronische Auswerteschaltung (20) angeschlossen ist.

2. Ölstandskontrollvorrichtung nach Anspruch 1, dadurch gekennzeichnet, daß der Sensor ein Schwimmerschalter ist.

3. Ölstandskontrollvorrichtung nach Anspruch 1, dadurch gekennzeichnet, daß der Sensor ein Kaltleiter (18) ist.

4. Ölstandskontrollvorrichtung nach einem der vorhergehenden Ansprüche,
dadurch gekennzeichnet, daß die Auswerteschaltung (20) Signallämpchen (26, 28, 30) entsprechend dem Widerstandwert des Kaltleiters (18) ansteuert.

5. Ölstandskontrollvorrichtung nach einem der vorhergehenden Ansprüche,
dadurch gekennzeichnet, daß ein Taster (24) vorgesehen ist, der über ein Zeitglied die Elektronikschaltung (20) für eine vorbestimmte Zeitdauer einschaltet.

6. Ölstandskontrollvorrichtung nach Anspruch 1, dadurch gekennzeichnet, daß der Sensor (18) den Flüssigkeitsstand innerhalb der Ölwanne kontinuierlich oder stufenweise anzeigt.

7. Ölstandskontrollvorrichtung nach einem der vorhergehenden Ansprüche,
dadurch gekennzeichnet, daß die Auswerteschaltung (20) Signallämpchen (26, 28, 30) entsprechend dem Stand des Schwimmerschalters oder Graphiksymbole auf Display ansteuert.

## Fig.1

## Fig.2

## Europäisches Patentamt

# EUROPÄISCHER RECHERCHENBERICHT

Nummer der Anmeldung

# EP 91 11 2270

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 579 717 (WOOD)<br>* Spalte 2, Zeile 22 - Spalte 3, Zeile 4; Spalte 3, Zeile 65 - Spalte 4, Zeile 5; Spalte 5, Zeile 72 - Spalte 6, Zeile 18; Figuren 1-7 * | 1,6,7 | F 01 M 11/12<br>G 01 F 23/68<br>G 01 F 23/24 |
| | – – – | | |
| A | PATENT ABSTRACTS OF JAPAN Band 9, Nr. 215 (M-409)(1938), 3. September 1985;<br>& JP - A - 60075709 (YAMAHA HATSUDOKI) 30.04.1985<br>* insgesamt * | 1,2 | |
| | – – – | | |
| A | US-A-4 091 250 (SIIBERG)<br>* Spalte 2, Zeile 49 - Spalte 3, Zeile 29; Spalte 4, Zeile 21 - Spalte 5, Zeile 4; Figuren 1-3 * | 2 | |
| | – – – | | |
| A | US-A-4 065 760 (FELDON)<br>* Spalte 6, Zeile 33 - Spalte 7, Zeile 11; Spalte 8, Zeilen 18-48; Figuren 1,2 * | 3,4 | |
| | – – – | | |
| A | DE-A-3 232 333 (SIEMENS)<br>* Seite 7, Zeile 15 - Seite 9, Zeile 5; Seite 10, Zeile 32 - Seite 12, Zeile 8; Seite 13, Zeile 35 - Seite 14, Zeile 23; Figuren 1-5 * | 3,4 | |
| | – – – | | **RECHERCHIERTE SACHGEBIETE (Int. Cl.5)** |
| A | US-A-4 638 288 (REMEC)<br>* Spalte 4, Zeilen 10-56; Spalte 5, Zeilen 7-25; Figuren 3,4,6 * | 1,3,4 | F 01 M 11/00<br>G 01 F 23/00 |
| | – – – | | |
| A | US-A-4 684 917 (THARMAN)<br>* Spalte 1, Zeile 41 - Spalte 2, Zeile 39; Spalte 3, Zeile 51 - Spalte 4, Zeile 2; Figuren 1,2 * | 1,2 | |
| | – – – | | |
| A | DE-A-2 923 750 (SINGER)<br>* insgesamt * | | |
| | – – – – – | | |

Der vorliegende Recherchenbericht wurde für alle Patentansprüche erstellt

| Recherchenort | Abschlußdatum der Recherche | Prüfer |
|---|---|---|
| Berlin | 24 Oktober 91 | BEITNER M.J.J.B. |